# EUROPÄISCHE PATENTSCHRIFT

(11) **EP 4 183 249 B1**
(45) Veröffentlichungstag und Bekanntmachung des Hinweises auf die Patenterteilung: **20.03.2024**
(21) Anmeldenummer: 22208037.6
(22) Anmeldetag: 17.11.2022
(51) Int. Cl.: A01K 5/01

(54) **VORRICHTUNG ZUM FÜTTERN VON KLEINTIEREN**
APPARATUS FOR FEEDING SMALL ANIMALS
DISPOSITIF D'ALIMENTATION POUR PETITS ANIMAUX

(30) Priorität: 19.11.2021 AT 509272021
(43) Veröffentlichungstag der Anmeldung: 24.05.2023
(73) Patentinhaber: Bruckner, Otto, 4040 Linz (AT)
(72) Erfinder: Bruckner, Otto, 4040 Linz (AT)
(74) Vertreter: Hübscher & Partner Patentanwälte GmbH

(56) Entgegenhaltungen:
- US-A1- 2006 201 434
- US-A1- 2007 261 641

## Beschreibung

Die Erfindung bezieht sich auf eine Vorrichtung zum Füttern von Kleintieren mit einer Futterbehälteraufnahme und einem in die Futterbehälteraufnahme lösbar einsetzbaren Futterbehälter, der zwischen einer Fressstellung, in der der Futterbehälter unter Vorspannung gegen eine in Entnahmerichtung wirkende Federkraft in die die Futterbehälteraufnahme eingesetzt ist, und einer Freigabestellung, in der der Futterbehälter gegenüber seiner Fressstellung in Entnahmerichtung angehoben ist, verlagerbar ist.

Aus der US20070261641A1 ist eine Vorrichtung zum Füttern von Kleintieren bekannt. Die Vorrichtung weist eine Futterbehälteraufnahme mit einer höhenverlagerbaren Aufnahmeschale auf, in die ein Futterbehälter eingesetzt werden kann. Die Aufnahmeschale der Futterbehälteraufnahme kann über einen Verstellmechanismus, umfassend eine Feder, gegen die die Aufnahmeschale unter Vorspannung anstellbar ist, und einen Stelltrieb zum Festhalten der Aufnahmeschale entgegen der Federkraft, höhenverlagert werden, wodurch der in der Aufnahmeschale angeordnete Futterbehälter zwischen einer Fressstellung und einer gegenüber seiner Fressstellung in Entnahmerichtung angehobenen Freigabestellung verlagert werden kann. Die angehobene Freigabestellung erleichtert zwar das Herausnehmen des Futterbehälters aus der Futterbehälteraufnahme, allerdings kann ein ungestümes Fressverhalten eines Kleintiers, beispielsweise durch Ausschlecken des inneren Randbereichs des Futterbehälters, zu einem unabsichtlichen Lösen des Futterbehälters aus der Futterbehälteraufnahme führen. Insbesondere ergibt sich das Problem für leichte Futterbehältern, also beispielsweise für Einwegfutterbehälter aus Kunststoff.

Der Erfindung liegt somit die Aufgabe zugrunde, eine Vorrichtung der eingangs geschilderten Art so zu verbessern, dass trotz einer einfachen Austauschbarkeit des Futterbehälters ein sicherer Halt des Futterbehälters, insbesondere von Einwegfutterbehältern, in der Futterbehälteraufnahme unabhängig vom Fressverhalten des Kleintiers ermöglicht wird.

Die Erfindung löst die gestellte Aufgabe dadurch, dass die Futterbehälteraufnahme ein Halteelement aufweist, das derart quer zur Entnahmerichtung gegen den Futterbehälter verlagerbar und anstellbar ist, dass das Halteelement den Futterbehälter in Fressstellung in der Futterbehälteraufnahme fixiert.

Zufolge der erfindungsgemäßen Maßnahmen ist der Futterbehälter in Fressstellung nicht nur gegenüber der Freigabestellung bezüglich der Entnahmerichtung abgesenkt, sondern wird in Fressstellung von wenigstens einem verlagerbaren Halteelement festgehalten, sodass ein Anheben des Futterbehälters in Entnahmerichtung durch beispielsweise Schleckbewegungen verhindert wird. Zum Fixieren des Futterbehälters kann das Halteelement kraft- und/oder formschlüssig lösbar mit dem Futterbehälter verbunden werden. Hierzu wird das Haltelement quer zu Entnahmerichtung beispielsweise mittels eines Stelltriebs gegen den Futterbehälter, insbesondere mantelseitig, angestellt. Die Entnahmerichtung verläuft parallel zur Grundkörperhauptachse. Soll ein gelöster Futterbehälter in Fressstellung gebracht werden, wird dieser gegen die Vorspannung einer in Entnahmerichtung wirkenden Federkraft angestellt und hinuntergedrückt, wonach das Halteelement quer zur Entnahmerichtung in Richtung des Futterbehälters verlagert wird, wodurch der Futterbehälter in seiner Fressstellung in der Futterbehälteraufnahme fixiert ist. Nach der Fütterung kann das Halteelement quer zur Entnahmerichtung zurückverlagert werden, wodurch die Fixierung durch die Halteelemente gelöst wird und der Futterbehälter durch die Vorspannung der Federkraft in Freigabestellung gehoben wird, was eine einfache Entnahme des Futterbehälters aus der Futterbehälteraufnahme ermöglicht. Die Vorrichtung eignet sich insbesondere für einen Einwegfutterbehälter, dessen Versiegelung nach Fixieren des Einwegfutterbehälters in der Fressstellung auf einfache Weise vom restlichen Einwegfutterbehälter gelöst werden kann, ohne dabei in Kontakt mit dem restlichen Einwegfutterbehälter bzw. mit dem Futter zu kommen. Durch das Anheben des Einwegfutterbehälters in Freigabestellung wird auch ein hygienisches Entfernen des Einwegfutterbehälters ermöglicht.

Das Halteelement kann beispielsweise ein Band sein, dessen Umfang über einen Stelltrieb variiert werden kann und dadurch den Futterbehälter einfassen und in Fressstellung fixieren kann. Ein besonders sicherer Halt ergibt sich allerdings insbesondere dann, wenn das Halteelement ein Rast- und/oder Klemmkörper ist, der in Fressstellung des Futterbehälters radial in den Futterbehälter, insbesondere in eine Aufnahme des Futterbehälters, eingreift. In diesem Fall ist der Rast- und/oder Klemmkörper derart quer zur Entnahmerichtung gegen den Futterbehälter verlagerbar und anstellbar, dass in Fressstellung der Rast- und/oder Klemmkörper in eine Aufnahme und/oder Ausnehmung des Futterbehälters eingreift. Bei entsprechender Materialwahl des Futterbehälters kann die Fixierung mittels der Rast- und/oder Klemmkörper auch durch eine Verformung des Futterbehältermaterials erfolgen. Naturgemäß können auch mehrere Rast- und/oder Klemmkörper vorgesehen sein. Mehrere Rast- und/oder Klemmkörper können beispielsweise an gegenüberliegenden Seiten in den Futterbehälter eingreifen. Insbesondere ein Formschluss zwischen Rastkörpern und Aufnahme erzielt eine besonders sichere Fixierung. Dadurch wird der Futterbehälter nicht nur gegen ein Herausnehmen in Entnahmerichtung gesichert, sondern auch gegen ein Verdrehen.

Im Sinne einer Langlebigkeit des Verlagerungsmechanismus und der Fixierung des Futterbehälters in Fressstellung ist es vorteilhaft, wenn das Halteelement ein Rastkörper ist bzw. einen Rastkörper aufweist, der in Fressstellung des Futterbehälters radial in eine Aufnahme des Futterbehälters greift, wobei die Aufnahme in einem bodenseitig des Futterbehälters vorgesehenen Kragenfortsatz angeordnet ist. Der Kragenfortsatz, die darin angeordnete Aufnahme und somit der in die Aufnahme eingreifende Rastkörper sind somit am Boden angeordnet und so weit wie möglich vom Kleintier beabstandet, sodass das Risiko einer Verschmutzung oder dergleichen reduziert werden kann. Die Aufnahme kann vorzugsweise eine umfangseitig um den Futterbehälter verlaufende Vertiefung, beispielsweise eine Nut, sein.

Je nach Art des Kleintiers können unterschiedlich große Futterbehälteraufnahmen und damit korrespondierende Futterbehälter vorgesehen sein. Um auch bei verhältnismäßig groß ausgebildeten Vorrichtungen einen sicheren Halt des Futterbehälters in der Futterbehälteraufnahme zu gewährleisten, wird vorgeschlagen, dass mehrere Halteelemente vorgesehen sind, welche umfangseitig gegen den Futterbehälter anstellbar sind. Vorzugsweise können wenigstens zwei Halteelemente vorgesehen sein, welche diametral gegenüberliegend angeordnet sind. Es können auch mehrere umfangseitig regelmäßig angeordnete Halteelemente vorgesehen sein. Im Falle von Rastkörpern als Haltelemente können also mehrere Rastkörper vorgesehen sein, die zum umfangseitigen Eingreifen in eine umfangseitig des Futterbehälters verlaufende Aufnahme ausgebildet sind.

Um das Einsetzen und Fixieren des Futterbehälters besonders einfach auszugestalten, empfiehlt es sich in einer bevorzugten Ausgestaltungsform der erfindungsgemäßen Vorrichtung, dass das bzw. die Halteelemente zum Verlagern in Richtung des Futterbehälters gegen quer zur Entnahmerichtung wirkende Federn angestellt ist bzw. sind. Auf diese Weise kommt es beim Einsetzen des Futterbehälters in die Futterbehälteraufnahme automatisch zu einer Verlagerung der Halteelemente in Richtung des Futterbehälters, sodass dieser in der Fressstellung fixiert wird, ohne einen Stelltrieb betätigen zu müssen. Der Stelltrieb wird in diesem Fall nur zum Lösen der Halteelemente, also zum Verlagern der Halteelemente quer zur Entnahmerichtung weg vom Futterbehälter, benötigt.

Damit speziell beim Einsatz von einer Rastverbindung als Halteelement zum Fixieren des Futterbehälters in der Fressstellung ein reibungsloses Eingreifen der Rastkörper in die Aufnahmen bzw. Ausnehmungen des Futterbehälters ermöglicht werden kann, wird vorgeschlagen, dass die Futterbehälteraufnahme einen Führungsgang für einen auf der äußeren Mantelfläche des Futterbehälters angeordneten Führungssteg ausbildet. Der Führungsgang ist dabei so angeordnet, dass der Futterbehälter über dessen Führungssteg beim Verlagern in Fressstellung so ausgerichtet wird, dass die Ausnehmungen bzw. Aufnahmen des Futterbehälters auf die Rastkörper der Futterbehälteraufnahme ausgerichtet werden. Der Führungsgang und Führungssteg können im Wesentlichen in Entnahmerichtung verlaufen. Es können auch mehrere Führungsgänge und Führungsstege vorgesehen sein. Die Führungsstege können umfangseitig gleichmäßig oder ungleichmäßig an der äußeren Mantelfläche des Futterbehälters angeordnet sein. Die Führungsgänge können umfangseitig an der den Futterbehälter einfassenden Innenfläche der Futterbehälteraufnahme angeordnet sein.

Um einem unkontrollierten Lösevorgang beim federkraftbedingten Verlagern des Futterbehälters von der Fressstellung in Freigabestellung entgegenzuwirken, können der Führungsgang und der Führungssteg bezüglich der Entnahmerichtung geneigt sein. Die Neigung wirkt der Federkraft entgegen, sodass der Futterbehälter kontrolliert in Freigabestellung herausgedreht wird. Der Führungsgang und Führungssteg können darüber hinaus gekrümmt ausgebildet sein. Vorzugsweise bilden die Führungsgänge ein mehrgängiges Steilgewinde, in das ein oder mehrere Führungsgänge des Futterbehälters eingreifen.

Damit zum einen die Verletzungsgefahr des Tieres beim Fressen minimiert wird und zum anderen eine Verschmutzung der Mechanik der Vorrichtung verhindert wird, können in Fressstellung die Deckflächen des Futterbehälters und der Futterbehälteraufnahme bündig sein. Hierzu kann die Futterbehälteraufnahme Abstufungen zum Einsetzen des Randbereichs des Futterbehälters aufweisen. Dadurch ergibt sich der weitere Vorteil, dass der äußere Mantelbereich des Futterbehälters in Fressstellung nicht dem Kleintier ausgesetzt ist, sondern vollständig in der Futterbehälteraufnahme versenkt ist, sodass der äußere Mantelbereich für ein hygienisches Herausnehmen des Futterbehälters frei von Futterresten oder Speichel bleibt.

Damit die Fütterung des Kleintieres auf besonders hygienische Art und Weise durchgeführt werden kann, wird ein Futterbehälter mit einem hohlen, das Futter aufnehmenden Grundkörper vorgeschlagen, wobei der Grundkörper mantelseitig eine Aufnahme für ein gegen den Futterbehälter anstellbares Halteelement ausbildet und deckseitig von einer lösbaren Versiegelung verschlossen ist. Insbesondere kann der Futterbehälter als Einwegfutterbehälter ausgebildet sein, der nach Benützung entsorgt oder bei einer entsprechenden Abgabestelle recycelt werden kann. Der Grundkörper kann bodenseitig einen Kragenfortsatz ausbilden, in dem als Aufnahme eine umfangseitig verlaufende Nut für Rastkörper als Halteelemente vorgesehen sind. Die Aufnahme kann auch als in regelmäßigen Abständen umfangseitig am Kragenfortsatz angeordnete Durchbrüche ausgebildet sein. Zum Ausrichten des Futterbehälters auf Rastkörper oder dergleichen einer Futterbehälteraufnahme kann auf der äußeren Mantelfläche des Grundkörpers ein im Wesentlichen in Richtung der Grundkörperhauptachse verlaufender Führungssteg vorgesehen sein, der vorzugsweise bezüglich der Grundkörperhauptachse geneigt ist. Insbesondere können zwei oder mehr Führungsstege vorgesehen sein. Mehrere Führungsstege können ein Schraubengewinde nachbilden.

In der Zeichnung ist der Erfindungsgegenstand beispielsweise dargestellt. Es zeigen
- Fig. 1: eine Explosionsdarstellung der erfindungsgemäßen Vorrichtung in Schrägansicht,
- Fig. 2: einen schematischen Schnitt durch eine erfindungsgemäße Vorrichtung, wobei der Futterbehälter in Fressstellung in der Futterbehälteraufnahme fixiert ist und
- Fig. 3: einen schematischen Schnitt durch eine erfindungsgemäße Vorrichtung, wobei der Futterbehälter in Freigabestellung lösbar in der Futterbehälteraufnahme angeordnet ist.

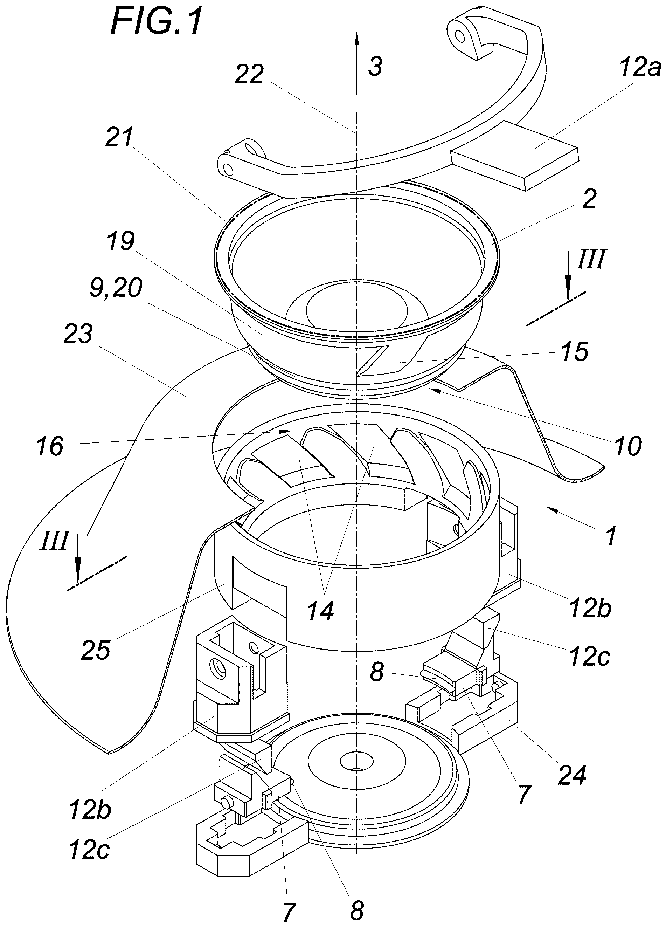

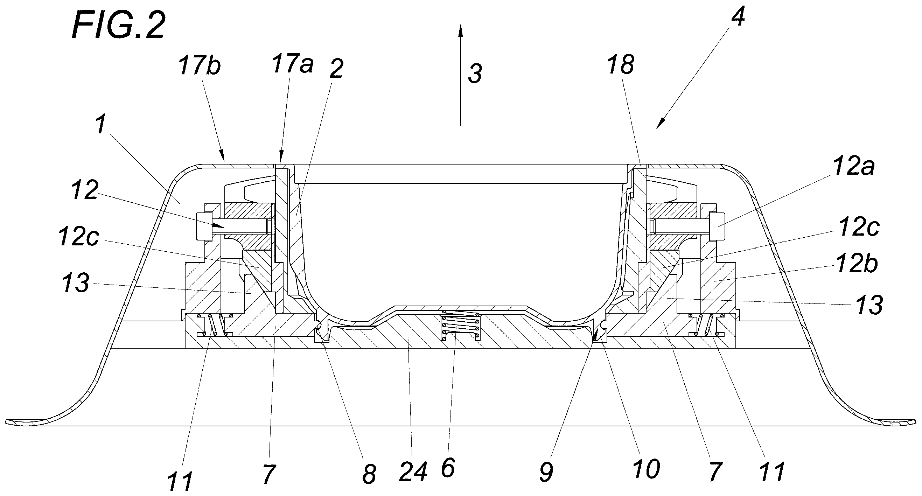

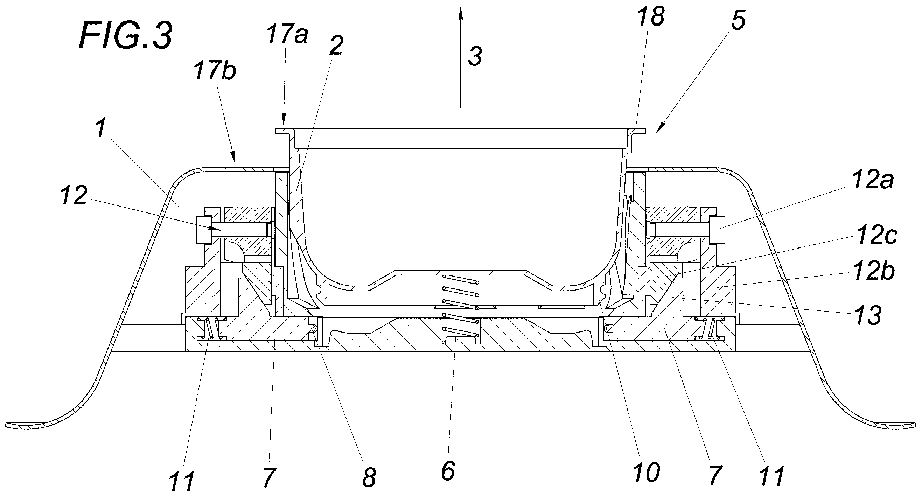

Eine erfindungsgemäße Vorrichtung zum Füttern von Kleintieren weist, wie beispielsweise aus Fig. 1 ersichtlich ist, eine Futterbehälteraufnahme 1 und einen Futterbehälter 2 auf, der lösbar gegen eine Entnahmerichtung 3 in die Futterbehälteraufnahme 1 eingesetzt werden kann. Der Futterbehälter 2 kann zwischen einer in Fig. 2 dargestellten Fressstellung 4 und einer in Fig. 3 dargestellten Freigabestellung 5 verlagert werden. In Fressstellung 4 ist der Futterbehälter 2 unter Vorspannung gegen eine in Entnahmerichtung 3 wirkende Federkraft, erzeugt durch beispielsweise eine Feder 6, angestellt und in die Futterbehälteraufnahme 1 eingesetzt. Zum Fixieren in dieser Fressstellung 4 weist die Futterbehälteraufnahme 1 erfindungsgemäß ein Halteelement 7 auf, das quer zur Entnahmerichtung 3 gegen den Futterbehälter 2 verlagerbar und anstellbar ist. Das Halteelement 7 greift demnach direkt an den Futterbehälter 2 an bzw. in den Futterbehälter 2 ein, wodurch ein unbeabsichtigtes Anheben des Futterbehälters 2 in Entnahmerichtung 3 verhindert wird. Soll der Futterbehälter 2 nach dem Fressvorgang entfernt werden, so wird das Halteelement 7 zurück verlagert, wodurch die Federkraft den Futterbehälter 2 in Freigabestellung 5 (Fig. 3) anhebt, wodurch dieser an der Mantelaußenfläche gegriffen werden kann, ohne in Kontakt mit dem Futter zu kommen.

Das in dem Ausführungsbeispiel angeführte Halteelement 7 weist einen Rastkörper 8 auf, der in Fressstellung 4 radial, quer zur Entnahmerichtung 3 in eine Nut 9 als Aufnahme 20 des Futterbehälters 2 eingreift. Die Nut 9 kann vorzugsweise in einem Kragenfortsatz 10, welche bodenseitig des Futterbehälters 2 angeordnet ist, vorgesehen sein.

Wie in den Figs. 2 und 3 angedeutet ist, können mehrere Halteelemente 7 vorgesehen sein, welche umfangseitig gegen den Futterbehälter 2 anstellbar sind. Beispielsweise können zwei sich diametral gegenüberliegende Halteelemente 7 vorgesehen sein, welche umfangseitig gegen den Futterbehälter 2 anstellbar sind.

Eine besonders praktikable Sicherung des Futterbehälters 2 in Fressstellung 4 ergibt sich, wenn die Halteelemente 7 zum Verlagern in Richtung des Futterbehälters 2 gegen quer zur Entnahmerichtung 3 wirkende Federn 11 angestellt sind. Auf diese Weise erfolgt die Fixierung des Futterbehälters 2 beim Hinunterdrücken entgegen der Entnahmerichtung 3 in Fressstellung 4, bedingt durch die Federn 11, automatisch, sodass ein Stelltrieb 12 a,b,c nur zum Lösen der Halteelemente 7 benötigt wird. Der Stelltrieb 12 a,b,c, umfassend einen Hebel 12a und Lagerelemente 12b für den Hebel 12a, kann hierzu einen Keil 12c aufweisen, der, ebenfalls in den Lagerelementen 12b angeordnet ist und an einen Keilfortsatz 13 des Halteelements 7 angreift und durch Herunterdrücken die Halteelemente 7 radial nach außen auseinandertreibt, sodass die Rastverbindung zwischen Rastkörper 8 und Nut 9 gelöst wird und die Feder 6 den Futterbehälter 2 anhebt. Damit die Rastkörper 8 beim Herunterdrücken des Futterbehälters 2 in Fressstellung 4 in die Nut 9 gleiten können, kann der Kragenfortsatz 10 bodenseitig eine angeschrägte Anlauffläche ausbilden, sodass die Halteelemente 7 beim Herunterdrücken des Futterbehälters 2 zunächst von der Anlauffläche auseinandergetrieben werden und bei Erreichen der Nut 9 in diese einrasten können.

Insbesondere aus Fig. 1 geht hervor, dass die Futterbehälteraufnahme 1 einen Führungsgang 14 für einen Führungssteg 15 des Futterbehälters 2 aufweist. Der Führungssteg 15 kann auf der äußeren Mantelfläche des Futterbehälters 2 angeordnet sein. Der Führungsgang 14 kann auf der den Futterbehälter 2 einfassenden Innenfläche 16, insbesondere auf der Innenfläche 16 des Aufnahmekranzes 25 der Futterbehälteraufnahme 1 angeordnet sein. Es können auch mehrere Führungsgänge 14 und Führungsstege 15 vorgesehen sein. Die Anzahl der Führungsgänge 14 kann ein ganzzahliges Vielfaches der Anzahl der Führungsstege 15 sein, wodurch die Flexibilität beim Einsetzen des Futterbehälters 2 in die Futterbehälteraufnahme 1 erhöht wird. Insbesondere können die Führungsgänge 14 und die Führungsstege 15 bezüglich der Entnahmerichtung 3 geneigt sein. Auf diese Weise ergibt sich eine Art mehrgängige Schraubenverbindung.

In Fig. 2 wird offenbart, dass in Fressstellung 4 die Deckfläche 17a des Futterbehälters 2 und die Deckfläche 17b der Futterbehälteraufnahme 1 bündig sind. Dies kann durch eine Abstufung der Futterbehälteraufnahme 1 erfolgen, in die der Randbereich 18 des Futterbehälters 2 eingesetzt ist.

Aus der Explosionsdarstellung in Fig. 1 kann ein erfindungsgemäßer Futterbehälter 2 entnommen werden. Dieser weist einen hohlen Grundkörper 19 auf. Der Grundkörper 19 bildet eine Aufnahme 20, beispielsweise umfassend eine umfangseitig verlaufende Nut 9, für ein gegen den Futterbehälter 2 anstellbares Halteelement 7 aus. Darüber hinaus ist der Grundkörper 19 deckseitig von einer lösbaren Versiegelung 21 verschlossen. Der Grundkörper 19 kann bodenseitig einen Kragenfortsatz 10 ausbilden, in dem eine Nut 9 für Rastkörper 8 vorgesehen ist. Auf der äußeren Mantelfläche des Grundkörpers 19 kann ein in Richtung der Grundkörperhauptachse 22 verlaufender Führungssteg 15 vorgesehen sein, der vorzugsweise bezüglich der Grundkörperhauptachse 22 geneigt ist. In Richtung der Grundkörperhauptachse 22 verlaufend bedeutet demnach nicht, dass der Führungssteg 15 bzw. die Führungsstege 15 parallel zur Grundkörperhauptachse 22 verlaufen müssen, sondern eine Verlagerung des Futterbehälters 2 entlang der Grundkörperhauptachse 22 zulassen.

Fig. 1 zeigt mögliche Bestandteile der Futterbehälteraufnahme 1. So kann diese eine Aufnahmehülle 23 umfassen, in der bodenseitig eine Aufnahmebasis 24 angeordnet ist. In der Aufnahmebasis 24 können die Halteelemente 7 verlagerbar angeordnet sein. In der Aufnahmehülle 23 kann ebenfalls der Stelltrieb 12 a,b,c, umfassend den Hebel 12a, die Lagerelemente 12b für den Hebel 12a und die Keile 12c, welche mit dem Hebel 12a wirkverbunden sind, angeordnet sein. Der Aufnahmekranz 25 kann mit den Lagerelementen 12b formschlüssig verbunden sein.

## Patentansprüche

1. Vorrichtung zum Füttern von Kleintieren mit einer Futterbehälteraufnahme (1) und einem in die Futterbehälteraufnahme (1) lösbar einsetzbaren Futterbehälter (2), der zwischen einer Fressstellung (4), in der der Futterbehälter (2) unter Vorspannung gegen eine in Entnahmerichtung (3) wirkende Federkraft in die Futterbehälteraufnahme (1) eingesetzt ist, und einer Freigabestellung (5), in der der Futterbehälter (2) gegenüber seiner Fressstellung (4) in Entnahmerichtung (3) angehoben ist, verlagerbar ist, wobei die Futterbehälteraufnahme (1) ein Halteelement (7) aufweist, **dadurch gekennzeichnet, dass** das Halteelement (7) derart quer zur Entnahmerichtung (3) gegen den Futterbehälter (2) verlagerbar und anstellbar ist, dass das Halteelement (7) den Futterbehälter (2) in Fressstellung (4) in der Futterbehälteraufnahme (1) fixiert.

2. Vorrichtung nach Anspruch 1, **dadurch gekennzeichnet, dass** das Halteelement (7) ein Rast- und/oder Klemmkörper ist, der in Fressstellung (4) des Futterbehälters (2) radial in den Futterbehälter (2), insbesondere in eine Aufnahme (20) des Futterbehälters (2), eingreift.

3. Vorrichtung nach Anspruch 1, **dadurch gekennzeichnet, dass** das Halteelement ein Rastkörper (8) ist, der in Fressstellung (4) des Futterbehälters (2) radial in eine Aufnahme (20) des Futterbehälters (2) greift, wobei die Aufnahme (20) in einem bodenseitig des Futterbehälters (2) vorgesehenen Kragenfortsatz (10) angeordnet ist.

4. Vorrichtung nach einem der Ansprüche 1 bis 3, **dadurch gekennzeichnet, dass** mehrere Halteelemente (7) vorgesehen sind, welche umfangseitig gegen den Futterbehälter (2) anstellbar sind.

5. Vorrichtung nach einem der Ansprüche 1 bis 4, **dadurch gekennzeichnet, dass** das bzw. die Halteelemente (7) zum Verlagern in Richtung des Futterbehälters (2) gegen quer zur Entnahmerichtung (3) wirkende Federn (11) angestellt ist bzw. sind.

6. Vorrichtung nach einem der Ansprüche 1 bis 5, **dadurch gekennzeichnet, dass** die Futterbehälteraufnahme (1) einen Führungsgang (14) für einen auf der äußeren Mantelfläche des Futterbehälters (2) angeordneten Führungssteg (15) ausbildet.

7. Vorrichtung nach Anspruch 6 **dadurch gekennzeichnet, dass** der Führungsgang (14) und der Führungssteg (15) bezüglich der Entnahmerichtung (3) geneigt sind.

8. Vorrichtung nach einem der Ansprüche 1 bis 7, **dadurch gekennzeichnet, dass** in Fressstellung (4) die Deckflächen (17 a,b) des Futterbehälters (2) und der Futterbehälteraufnahme (1) bündig sind.

9. Futterbehälter (2) für eine Vorrichtung nach einem der Ansprüche 1 bis 8 mit einem hohlen, das Futter aufnehmenden Grundkörper (19), **dadurch gekennzeichnet, dass** der Grundkörper (19) mantelseitig eine Aufnahme (20) für ein gegen den Futterbehälter (2) anstellbares Halteelement (7) ausbildet und deckseitig von einer lösbaren Versiegelung (21) verschlossen ist.

10. Futterbehälter nach Anspruch 9, **dadurch gekennzeichnet, dass** der Grundkörper (19) bodenseitig einen Kragenfortsatz (10) ausbildet, in dem als Aufnahme (20) eine umfangseitig verlaufende Nut (9) für Rastkörper (8) als Halteelemente (7) vorgesehen ist.

11. Futterbehälter nach Anspruch 9 oder 10, **dadurch gekennzeichnet, dass** auf der äußeren Mantelfläche des Grundkörpers (19) ein im Wesentlichen in Richtung der Grundkörperhauptachse (22) verlaufender Führungssteg (15) vorgesehen ist, der vorzugsweise bezüglich der Grundkörperhauptachse (22) geneigt ist.

## Claims

1. Device for feeding small animals, having a feed container receptacle (1) and a feed container (2) which can be releasably inserted into the feed container receptacle (1) and which can be shifted between a feeding position (4), in which the feed container (2) is inserted into the feed container receptacle (1) under prestress against a spring force acting in the removal direction (3), and a release position (5), in which the feed container (2) is raised relative to its feeding position (4) in the removal direction (3), wherein the feed container receptacle (1) has a retaining element (7), **characterised in that** the retaining element (7) can be shifted and set transversely to the removal direction (3) against the feed container (2) in such a way that the retaining element (7) fixes the feed container (2) in the feeding position (4) in the feed container receptacle (1).

2. Device according to claim 1, **characterised in that** the retaining element (7) is a snapping and/or clamping body which, in the feeding position (4) of the feed container (2), engages radially in the feed container (2), in particular in a receptacle (20) of the feed container (2).

3. Device according to claim 1, **characterised in that** the retaining element is a snapping body (8) which, in the feeding position (4) of the feed container (2), engages radially in a receptacle (20) of the feed container (2), the receptacle (20) being arranged in a collar extension (10) provided on the bottom side of the feed container (2).

4. Device according to one of claims 1 to 3, **characterised in that** a plurality of retaining elements (7) are provided, which can be circumferentially set against the feed container (2).

5. Device according to one of claims 1 to 4, **characterised in that** the retaining element(s) (7) for shifting in the direction of the feed container (2) is/are set against springs (11) acting transversely to the removal direction (3).

6. Device according to one of claims 1 to 5, **characterised in that** the feed container receptacle (1) forms a guiding groove (14) for a guiding ridge (15) arranged on the outer lateral surface of the feed container (2).

7. Device according to claim 6, **characterised in that** the guiding groove (14) and the guiding ridge (15) are inclined with respect to the removal direction (3).

8. Device according to one of claims 1 to 7, **characterised in that** in the feeding position (4) the cover surfaces (17 a, b) of the feed container (2) and the feed container receptacle (1) are flush.

9. Feed container (2) for a device according to one of claims 1 to 8 with a hollow base body (19) receiving the feed, **characterised in that** the base body (19) forms a receptacle (20) on the lateral surface side for a retaining element (7) which can be set against the feed container (2) and is closed on the cover side by a releasable seal (21).

10. Feed container according to claim 9, **characterised in that** the base body (19) forms a collar extension (10) on the bottom side, in which a groove (9) running around the circumference of the collar extension (10) is provided as a receptacle (20) for snapping bodies (8) as retaining elements (7).

11. Feed container according to claim 9 or 10, **characterised in that** a guiding ridge (15) extending substantially in the direction of the base body main axis (22) is provided on the outer lateral surface of the base body (19), which guiding ridge (15) is preferably inclined with respect to the base body main axis (22).

## Revendications

1. Dispositif d'alimentation pour petits animaux, comprenant un réceptacle pour récipient d'alimentation (1) et un récipient d'alimentation (2) qui peut être inséré de façon amovible à l'intérieur du réceptacle pour récipient d'alimentation (1) et qui peut être déplacé entre une position d'alimentation (4), dans laquelle le récipient d'alimentation (2) est inséré sous précontrainte à l'intérieur du réceptacle pour récipient d'alimentation (1) contre une force de ressort qui agit dans une direction d'enlèvement (3), et une position de libération (5), dans laquelle le récipient d'alimentation (2) est soulevé vis-à-vis de sa position d'alimentation (4) dans la direction d'enlèvement (3), dans lequel le réceptacle pour récipient d'alimentation (1) comprend un élément de retenue (7), **caractérisé en ce que** l'élément de retenue (7) peut être déplacé et ajusté transversalement à la direction d'enlèvement (3) contre le récipient d'alimentation (2) de telle sorte que l'élément de retenue (7) fixe le récipient d'alimentation (2) dans la position d'alimentation (4) à l'intérieur du réceptacle pour récipient d'alimentation (1).

2. Dispositif selon la revendication 1, **caractérisé en ce que** l'élément de retenue (7) est un corps d'encliquetage et/ou de serrage qui, dans la position d'alimentation (4) du récipient d'alimentation (2), s'engage radialement dans le récipient d'alimentation (2), en particulier dans un réceptacle (20) du récipient d'alimentation (2).

3. Dispositif selon la revendication 1, **caractérisé en ce que** l'élément de retenue est un corps d'encliquetage (8) qui, dans la position d'alimentation (4) du récipient d'alimentation (2), pénètre radialement dans un réceptacle (20) du récipient d'alimentation (2), dans lequel le réceptacle (20) est agencé dans un prolongement en collier (10) qui est prévu du côté de fond du récipient d'alimentation (2).

4. Dispositif selon l'une quelconque des revendications 1 à 3, **caractérisé en ce qu'**il comprend plusieurs éléments de retenue (7) qui peuvent être ajustés de façon périphérique contre le récipient d'alimentation (2).

5. Dispositif selon l'une quelconque des revendications 1 à 4, **caractérisé en ce que** le/les élément(s) de retenue (7), pour le déplacement dans la direction du récipient d'alimentation (2), est/sont ajusté(s) contre des ressorts (11) qui agissent transversalement à la direction d'enlèvement (3).

6. Dispositif selon l'une quelconque des revendications 1 à 5, **caractérisé en ce que** le réceptacle pour récipient d'alimentation (1) forme un couloir de guidage (14) pour recevoir une nervure de guidage (15) qui est prévue sur la surface d'enveloppe extérieure du récipient d'alimentation (2).

7. Dispositif selon la revendication 6, **caractérisé en ce que** le couloir de guidage (14) et la nervure de guidage (15) sont inclinés par rapport à la direction d'enlèvement (3).

8. Dispositif selon l'une quelconque des revendications 1 à 7, **caractérisé en ce que**, dans la position d'alimentation (4), les surfaces de couverture (17 a, b) du récipient d'alimentation (2) et du réceptacle pour récipient d'alimentation (1) sont affleurantes.

9. Récipient d'alimentation (2) pour un dispositif selon l'une quelconque des revendications 1 à 8, comprenant un corps de base creux (19) destiné à recevoir des aliments, **caractérisé en ce que** le corps de base (19) forme côté enveloppe un réceptacle (20) pour un élément de retenue (7) qui peut être ajusté contre le récipient d'alimentation (2), et est fermé côté couverture par un scellement amovible (21).

10. Récipient d'alimentation selon la revendication 9, **caractérisé en ce que** le corps de base (19) forme, sur le côté de fond, un prolongement en collier (10), dans lequel une rainure (9) s'étendant de façon périphérique est prévue comme réceptacle (20), pour des corps d'encliquetage servant d'éléments de retenue (7).

11. Récipient d'alimentation selon la revendication 9 ou 10, **caractérisé en ce qu'**une nervure de guidage (15) qui s'étend sensiblement dans la direction de l'axe principal (22) du corps de base (19) est prévue sur la surface d'enveloppe extérieure du corps de base, dans lequel ladite nervure de guidage est de préférence inclinée par rapport à l'axe principal (22) du corps de base.
